# EUROPEAN PATENT SPECIFICATION

(11) **EP 0 436 570 B1**
(45) Date of publication and mention of the grant of the patent: **03.01.1996**
(21) Application number: 89909932.9
(22) Date of filing: 29.08.1989
(51) Int. Cl.: C08G 63/82

(54) **IMPROVED PROCESS FOR MANUFACTURE OF POLYETHYLENE TEREPHTHALATE FILM CONTAINING SLIP ADDITIVE**
VERFAHREN ZUR HERSTELLUNG EINES POLYÄTHYLENTEREPHTHALAT-FILMES ENTHALTEND EIN SCHMIERMITTEL
PROCEDE AMELIORE DE FABRICATION DE FILMS EN TEREPHTHALATE DE POLYETHYLENE CONTENANT UN LUBRIFIANT

(30) Priority: 30.09.1988 US 251246
(43) Date of publication of application: 17.07.1991
(73) Proprietor: E.I. DU PONT DE NEMOURS AND COMPANY, Wilmington Delaware 19898 (US)
(72) Inventor: JACKSON, Robert, C., Florence, SC 29501 (US)
(74) Representative: Jones, Alan John
(86) International application number: US8903675
(87) International publication number: WO9003408

(56) References cited:
- JP-A-60 141 720
- JP-A-61 037 818
- JP-A-63 238 128
- US-A- 2 647 885
- US-A- 3 876 608
- US-A- 3 884 870
- US-A- 4 727 108
- CHEMICAL ABSTRACTS, vol. 90, no. 10, 1979, page 15, abstract no. 72649z, Columbus, Ohio, US; & RO-A-61 870 (INTREPRINDEREA DE FIBRE SINTELICE) 29-12-1976
- CHEMICAL ABSTRACTS, vol. 90, no. 18, 1979, page 19, abstract no. 138467x, Columbus, Ohio, US; N. BILBA et al.: "Zeolitic catalysts for preparing macromolecular substances", & MATER. PLAST. (BUCHAREST) 1978, 15(3), 140-2

## Description

### BACKGROUND OF THE INVENTION

Film of polyethylene terephthalate (sometimes abbreviated herein to PET) is a well established commercial product, which finds numerous applications, e.g., in packaging, photographic film base, and audio and video tape. PET films sometimes are difficult to handle, and especially to wind, because of the tendency of adjoining film layers to cling to one another. This problem can be solved, however, by adding to the film-forming material, prior to the extrusion of the film, certain fillers or slip additives, including certain crystalline sodium aluminosilicates, for example, as described in U.S. Patents 3,876,608 to Anderson et al.

PET film is commercially produced by a process which comprises the first step of ester interchange (or transesterification) between ethylene glycol and dimethyl terephthalate, catalyzed typically by manganese acetate, zinc acetate, calcium acetate, lithium glycolate, etc., to produce di(2-hydroxyethyl) terephthalate (sometimes abbreviated herein as DHET). In the second step, DHET is polymerized to polyethylene terephthalate at an elevated temperature and at a reduced pressure. The polymerization step requires a catalyst, and a common catalyst for this step is antimony trioxide, as disclosed in U.S. Patent 2,647,885 to Billica.

While antimony trioxide is an excellent catalyst, it nevertheless has the drawback of producing in the film defects such as black specks, large area polarization defects, and pimple rejects caused by polymer inclusions.

It, therefore, would be highly desirable to be able to produce the polymer in the presence of a catalyst which would not have such an adverse impact on the PET film.

### SUMMARY OF THE INVENTION

According to the present invention, there is provided
a process for manufacturing polyethylene terephthalate film containing a slip additive, which process comprises the steps of
transesterifying methyl terephthalate with ethylene glycol to form di(2-hydroxyethyl) terephthalate,
converting the resulting di(2-hydroxyethyl) terephthalate to polyethylene terephthalate by heating it at a reduced pressure in the presence of a catalyst,
adding a slip additive to the film-forming material at any time prior to film formation, and
forming the resulting slip additive-containing polyethylene terephthalate into film,
characterised by using crystalline sodium aluminosilicate molecular sieve having an average particle size of about 0.5-2.0 micrometers, in an amount of about 900-2700 ppm based on the final film, both as the slip additive and as the catalyst for the polymerization of di(2-hydroxyethyl) terephthalate, (DHET) and polymerising DHET in the absence of an antimony trionide compound.

### DETAILED DESCRIPTION OF THE INVENTION

The process of the present invention can be conducted essentially in the same manner as the process heretofore employed in the industrial practice, except that the antimony trioxide catalyst is eliminated from the polymerization step.

Crystalline sodium aluminosilicate molecular sieve is a commercial, synthetic zeolite. Typical suitable zeolites include those available from Union Carbide Co. under the names Linde Molecular Sieve^{®} Type 13X and Type 4A. The former can be represented by the following formula:

Na₈₆[(AlO₂)₈₆(SiO₂)₁₀₆].X H₂O,

where the value of X depends on the degree of hydration of the material. The activated material can adsorb about one third of its weight of water, but the commercial material contains less than 1.5 to less than 2.5% of water, depending on its particle size.

It has a pore size such that it can adsorb molecules having an effective diameter of up to 10 A, and especially those that are adsorbed on molecular sieves of types 3A, 4A, and 5A.

The second zeolite has the formula:

Na₁₂[AlO₂)₁₂(SiO₂)₁₂.27 H₂O.

Generally speaking, the usual commercial crystalline sodium aluminosilicates which can be ground to the desired particle size are suitable in the process of this invention.

The preferred amount of sodium aluminosilicate is about 1100-1550 ppm, based on the final PET film. The commercial material, which may have an average particle size of about 2-10 micrometers (5.0 micrometers for Linde Type 13X), is finely ground to the desired average particle size. For example, for the video tape, the average particle size is about 0.5 micrometer, while for other applications such as, e.g., audio tape, it can be larger, within the specified range.

In the preferred amounts, this zeolite, in addition to being an excellent polymerization catalyst, also provides a good degree of slip for the PET film. At the lower end of the broad range, winding of the film may be more difficult, while above the upper level of the broad range, the zeolite may cause undesirable surface characteristics such as, e.g., excessive rougness or loss of clarity. In general, the amount of sodium aluminosilicate molecular sieve used in this process depends more on the surface quality and customer acceptance than on its catalytic activity.

In a preferred embodiment of this invention, the transesterification reaction will be conducted in a continuous manner, although a batch process also can be employed. For each mole of methyl terephthalate, two moles of ethylene glycol are fed, together with the transesterification catalyst, which preferably is zinc acetate together with lithium glycolate, to a reactor maintained at a temperature of about 230-240°C and a pressure of about 36 kPa at a rate such that the residence time is about 70-80 min. About 20-200 ppm of catalyst can be used. The preferred catalyst is zinc, as zinc acetate, in an amount of about 50 ppm, together with lithium, as lithium glycolate, in an amount of about 20 ppm, both based on the final film.

Methyl alcohol formed in this reaction is continuously removed from the reactor and is recycled to the esterification of terephthalic acid. Sodium aluminosilicate molecular sieve is added to DHET formed in the transesterification step and is continuously preheated to about 260°C at a pressure gradually decreasing along its path from about 13.3 kPa to 4 kPa, to remove excess ethylene glycol.

The so concentrated material then is subjected to a still higher temperature of about 285-290°C and a lower pressure of about 0.67 kPa, to complete the polymerization reaction. Ethylene glycol formed in this step is removed at the reduced pressure and recycled.

PET resin obtained in this process is extruded into a film, which advantageously is stretched in a conventional manner in the machine direction and, optionally, in the transverse direction.

In comparative runs, employing sodium aluminosilicate molecular sieve at the level of 1325 ppm, PET film production rate was maintained at the same level in the absence and in the presence of 400 ppm of antimony trioxide catalyst at the DHET polymerization stage.

In addition to the surprising fact that the elimination of antimony trioxide from the usual commercial process has not reduced the efficiency of the polymerization reaction, an additional benefit has been realized in that the PET film produced by the improved process of this invention has a lower incidence of defects such as large area polarization (LAP) defects, black specks, and pimples. Further, the film-extruding equipment can be operated with longer intervals between cleanups because of a lower exudation rate.

Exudation is primarily due to cyclic ethylene terephthalate oligomer (principally trimer), which is always formed in equilibrium reactions throughout the entire polymerization process and is believed to be unavoidable, accompanied by smaller amounts of low molecular weight PET degradation products. These materials collect especially around the extruder's die. The improvement caused by the elimination of antimony trioxide appears to reduce the amount of low molecular weight PET degradation products.

Film made according to this process in plant-size equpment, which had a thickness of 14 micrometers and had a degree of stretch of approximately 3.5 times in the machine direction and 4.0 times in the transverse direction, was examined according to the standards adopted for commercial PET film. In the LAP test, using a piece of polarized plastic, about 25x37.5 cm, and examining the film under polarized light, microgel inclusions, which tend to shine under these conditions, are counted. Three fields of view (total area of about 2 m) are examined, and the total number of defects found in those three fields is added.

When operating according to the earlier process, in which 400 ppm of antimony trioxide had been used, the number of such LAP defects was about 2-6/m. After eliminating antimony trioxide from the process, this figure gradually decreased within 48 hours to 0/m and remained at that level.

Black specks and pimple defects also were virtually completely eliminated from the PET film made by the process of the present invention. Pimples are polymer inclusions or air borne contamination. Pimples caused by polymer inclusions, black specks, and LAP defects all are primarily wall scale that forms on transfer line piping and sloughs off, causing defects in the film. About 90% of such defects had been found to contain antimony.

The elimination of antimony trioxide also had a desirable side effect of reducing the amount of diethylene glycol from 1.98 to 1.61%. Diethylene glycol normally is formed from ethylene glycol during polymerization and is incorporated into the polymer chain. At high levels, it adversely affects such film properties as. e.g., its tensile strength and high temperature resistance. Antimony trioxide is known to enhance diethylene glycol formation from glycol.

## Claims

1. A process for manufacturing polyethylene terephthalate film containing a slip additive, which process comprises the steps of
transesterifying methyl terephthalate with ethylene glycol in the presence of a first catalyst, to form di(2-hydroxyethyl) terephthalate,
converting the resulting di(2-hydroxyethyl) terephthalate to polyethylene terephthalate by heating it at a reduced pressure in the presence of a second catalyst,
adding a slip additive to the film-forming material at any time prior to film formation, and
forming the resulting slip additive-containing polyethylene terephthalate into film,
characterised by using crystalline sodium aluminosilicate molecular sieve having an average particle size of about 0.5-2.0 micrometers, in an amount of about 900-2700 ppm based on the final polyethylene terephthalate film, both as the slip additive and as the second catalyst for the polymerization of di(2-hydroxyethyl) terephthalate (DHET) and polymerising DHET in the absence of an antimony trionide compound.

2. The process of Claim 1 wherein the amount of crystalline sodium aluminosilicate molecular sieve is 1100-1550 ppm based on the final polyethylene terephthalate film.

3. The process of Claim 1 wherein the crystalline sodium aluminosilicate molecular sieve has a pore size such that it can adsorb molecules having an effective diameter of up to 10 A.

4. The process of Claim 1 wherein the transesterification step is carried out in the presence of catalytic amounts of zinc acetate and of a lithium compound.

5. The process of Claim 4 wherein the lithium compound is lithium glycolate.

6. The process of Claim 1 which is a continuous process.

## Patentansprüche

1. Verfahren zur Herstellung einer Polyethylenterephthalatfolie, die einen Gleitzusatzstoff enthält, wobei das Verfahren die Stufen umfaßt:
Umesterung von Methylterephthalat mit Ethylenglycol in Gegenwart eines ersten Katalysators unter Bildung von Di(2-hydroxyethyl)-terephthalat,
Umwandlung des resultierenden Di(2-hydroxyethyl)-terephthalates zu Polyethylenterephthalat durch Erhitzen unter reduziertem Druck in Gegenwart eines zweiten Katalysators,
Zugabe eines Gleitzusatzstoffes zu dem folienbildenden Material zu irgendeiner Zeit vor der Folienbildung, und Formen des resultierenden Gleizusatzstoff-haltigen Polyethylenterephthalates zu einer Folie,
gekennzeichnet durch die Verwendung eines kristallinen Natriumalumosilicat-Molekularsiebes, das eine durchschnittliche Teilchengröße von etwa 0,5 bis 2,0 µm besitzt, in einer Menge von etwa 900-2700 ppm, bezogen auf die fertige Polyethylenterephthalatfolie, sowohl als Gleitzusatzstoff als auch als zweiten Katalysator zur Polymerisation des Di(2-hydroxyethyl)-terephthalates (DHET), und Polymerisierung von DHET in Abwesenheit einer Antimontrioxid-Verbindung.

2. Verfahren nach Anspruch 1, bei dem die Menge an kristalinem Natriumalumosilicat-Molekularsieb, bezogen auf die fertige Polyethylenterephthalatfolie, 1100-1550 ppm beträgt.

3. Verfahren nach Anspruch 1, bei dem das kristalline Natriumalumosilicat-Molekularsieb eine Porengröße besitzt, so daß es Moleküle absorbieren kann, die einen wirksamen Durchmesser von bis zu 10 Å aufweisen.

4. Verfahren nach Anspruch 1, bei dem die Umesterungsstufe in Gegenwart von katalytischen Mengen Zinkacetat und einer Lithiumverbindung durchgeführt wird.

5. Verfahren nach Anspruch 4, bei dem die Lithiumverbindung Lithiumglycolat ist.

6. Verfahren nach Anspruch 1, das ein kontinuierliches Verfahren ist.

## Revendications

1. Un procédé de fabrication de film de téréphtalate de polyéthylène contenant un additif lubrifiant, ledit procédé comprenant les étapes de:
- transestérification du téréphtalate de méthyle par l'éthylèneglycol en présence d'un premier catalyseur, pour former du téréphtalate de di-(2-hydroxyéthyle);
- conversion du téréphtalate de di-(2-hydroxyéthyle) obtenu en téréphtalate de polyéthylène par traitement de celui-ci sous pression réduite en présence d'un second catalyseur;
- addition d'un additif lubrifiant au matériau filmogène à tout moment avant la formation du film; et
- mise en forme du téréphtalate de polyéthylène résultant contenant l'additif lubrifiant ainsi obtenu en film,
caractérisé en ce que l'on utilise un tamis moléculaire d'aluminosilicate de sodium cristallin présentant une dimension particulaire d'environ 0,5 à 2,0 micromètres, en une quantité de 900 à 2700 ppm par rapport au film de téréphtalate de polyéthylène fini, à la fois en tant qu'additif lubrifiant et en tant que second catalyseur de la polymérisation du téréphtalate de di-(2-hydroxyéthyle) (DHET) et polymérisation du DHET en l'absence de dérivé de trioxyde d'antimoine.

2. Le procédé selon la revendication 1, dans lequel la quantité de tamis moléculaire d'aluminosilicate cristallin est de 1100 à 1550 ppm par rapport au film de téréphtalate de polyéthylène fini.

3. Le procédé selon la revendication 1, dans lequel le tamis moléculaire d'aluminosilicate cristallin présente une dimension de pore telle qu'il puisse adsorber des molécules présentant un diamètre efficace pouvant atteindre 10 Angstroems.

4. Le procédé selon la revendication 1, dans lequel l'étape de transestérification est effectuée en présence d'une quantité catalytique d'acétate de zinc et d'un dérivé du lithium.

5. Le procédé selon la revendication 4, dans lequel le dérivé de lithium est le glycolate de lithium.

6. Le procédé selon la revendication 1, qui est un procédé en continu.
